# EUROPÄISCHE PATENTSCHRIFT

(11) **EP 2 347 490 B1**
(45) Veröffentlichungstag und Bekanntmachung des Hinweises auf die Patenterteilung: **05.09.2018**
(21) Anmeldenummer: 09744906.0
(22) Anmeldetag: 23.09.2009
(51) Int. Cl.: H02H 1/00, H02H 3/33

(54) **FEHLERSTROMSCHUTZSCHALTER**
RESIDUAL CURRENT CIRCUIT BREAKER
COMMUTATEUR DE PROTECTION CONTRE LES COURANTS DE DÉFAUT

(30) Priorität: 13.11.2008 AT 17632008
(43) Veröffentlichungstag der Anmeldung: 27.07.2011
(73) Patentinhaber: Eaton Intelligent Power Limited, Dublin 4 (IE)
(72) Erfinder: MEISEL, Rainer, A-1210 Wien (AT); RITZINGER, Georg, A-3423 Wolfpassing (AT)
(74) Vertreter: Eaton IP Group EMEA
(86) Internationale Anmeldenummer: PCT/AT2009/000370
(87) Internationale Veröffentlichungsnummer: WO 2010/054415

(56) Entgegenhaltungen:
- EP-A1- 0 399 923
- EP-A1- 0 936 716
- DE-A1-102007 007 263

## Beschreibung

Die Erfindung betrifft einen Fehlerstromschutzschalter gemäß dem Oberbegriff des Patentanspruches 1.

Es sind Fehlerstromschutzschalter bekannt, welche neben einer netzspannungsunabhängigen Auslöseelektronik eine netzspannungsabhängige Auslöseelektronik aufweisen, wobei bekannt ist, dass die netzspannungsabhängige Auslöseelektronik aktiviert wird, sobald die Versorgungsspannung einen vorgebbaren Grenzwert überschreitet. Nachteilig an derartigen Fehlerstromschutzschaltern ist, dass dadurch auch defekte netzspannungsabhängige Auslöseelektroniken "aktiviert" werden, wenn die Bedingungen hinsichtlich der Versorgungsspannung erfüllt sind, wodurch ein derartiger Fehlerstromschutzschalter nicht die ihm zugedachte Schutzfunktion erfüllt.

Die EP 399 923 A1 beschreibt ein Verfahren und eine Vorrichtung zur Messung eines Erdfehlerstromes in einem elektrischen Verteilernetz. Ein analoges Messsignal eines Erdfehlerstromes wird dabei vor dessen Digitalisierung mittels eines Verstärkers mit veränderbarem Verstärkungsfaktor verstärkt.

Aus der DE 10 2007 007 263 ist einen Fehlerstromschutzschalter mit einer analogen Signalverarbeitung bekannt, wobei ein Analogverstärker vorgesehen ist, dessen Verstärkungsfaktor über einen Schalter von Außen vorgegeben wird, um eine Veränderung der Empfindlichkeit des betreffenden Fehlerstromschutzschalters zu ermöglichen.

Die EP 936 716 A1 beschreibt einen Differenzschutzschalter mit einstellbarem Nennfehlerstrom.

Die EP 1 478 069 beschreibt einen Fehlerstromschutzschalter mit einer netzspannungsunabhängigen Sensoreinrichtung für Wechselfehlerstrom und pulsierenden Gleichfehlerstrom, und mit einer netzspannungsabhängigen Sensoreinrichtung für glatten Gleichfehlerstrom, Wechselfehlerstrom und pulsierenden Gleichfehlerstrom. Die beiden Sensoreinrichtungen sind parallel an eine Steuerleitung einer Auslöseeinrichtung angeschlossen, sowie mit einer gemeinsamen Sekundärwicklung eines Summenstromwandlers verbunden.

Aufgabe der Erfindung ist es daher einen Fehlerstromschutzschalter der eingangs genannten Art anzugeben, mit welchem die genannten Nachteile vermieden werden können, und mit welchem die Einsatzbereitschaft und die Sicherheit von Fehlerstromschutzschaltern mit netzspannungsabhängiger Auslöseelektronik erhöht werden kann.

Erfindungsgemäß wird dies durch die Merkmale des Patentanspruches 1 erreicht.

Dadurch kann die Einsatzbereitschaft und die Sicherheit von Fehlerstromschutzschaltern mit netzspannungsabhängiger Auslöseelektronik erhöht werden. Dadurch kann sichergestellt werden, dass die netzspannungsabhängigen Funktionen lediglich bei tatsächlich funktionierender netzspannungsabhängiger Auslöseelektronik aktiviert werden. Dadurch kann weiters sichergestellt werden, dass eine weiters vorhandene netzspannungsunabhängige Auslöseelektronik ausschließlich bei tatsächlich funktionierender netzspannungsabhängiger Auslöseelektronik deaktiviert bzw. gedämpft wird. Dadurch wird sichergestellt, dass die netzspannungsunabhängigen Grundfunktionen des Fehlerstromschutzschalters auch bei einer defekten netzspannungsabhängigen Auslöseelektronik erhalten bleiben und der Fehlerstromschutzschalter wenigstens das durch Normen vorgegebene Mindestmaß an Schutz gewährleistet.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine vierte Ausführungsform eines Fehlerstromschutzschalter;
Fig. 2 ein Fehlerstromschutzschalter gemäß dem Stand der Technik;
Fig. 3 eine erste Ausführungsform eines Fehlerstromschutzschalters, welcher nicht Teil der beanspruchten Erfindung ist;
Fig. 4 eine zweite Ausführungsform eines Fehlerstromschutzschalters, welcher nicht Teil der beanspruchten Erfindung ist;
Fig. 5 eine dritte Ausführungsform eines Fehlerstromschutzschalters, welcher nicht Teil der beanspruchten Erfindung ist; und
Fig. 6 eine bevorzugte Ausführungsform einer Steuerelektronik.

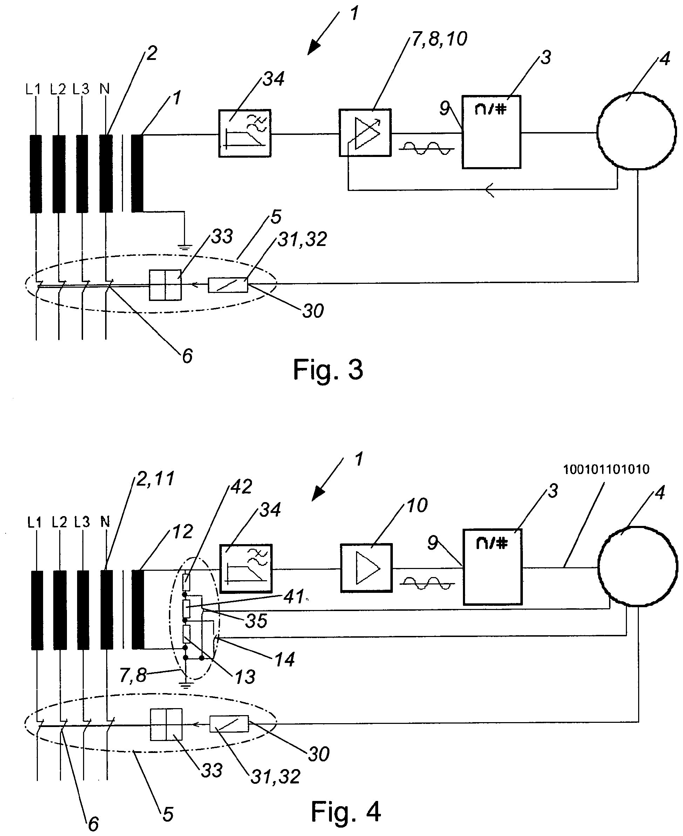

Die Fig. 3 bis 5 zeigen einen Fehlerstromschutzschalter 1, welche nicht Teil der beanspruchten Erfindung sind, mit einer ersten Einheit 2, welche zur Detektion eines Fehlerstromes innerhalb eines elektrischen Energieversorgungsnetzes und Ausgabe eines analogen Fehlerstromsignals ausgebildet ist, einem Analog/Digital-Wandler 3 zur Umwandlung des analogen Fehlerstromsignals in ein digitales Fehlerstromsignal, einer ersten digitalen Signalverarbeitungseinheit 4, und einer zweiten Einheit 5 zur vorgebbaren Trennung von Trennkontakten 6 in dem elektrischen Energieversorgungsnetz, wobei der Fehlerstromschutzschalter 1 erste Mittel 7 zur Anpassung des analogen Fehlerstromsignals an den Analog/Digital-Wandler 3 aufweist.

Dadurch kann ein Fehlerstromsignal über einen weiten Dynamikbereich erfasst und mit der jeweils notwendigen Auflösung detektiert werden, wobei lediglich kostengünstige Bauteile erforderlich sind, und derart die Kosten für einen derartigen Fehlerstromschutzschalter 1 gering gehalten werden können. Dadurch kann die Genauigkeit der Erfassung eines Fehlerstromes deutlich gesteigert werden, wodurch auch die Qualität einer nachfolgenden digitalen Signalanalyse deutlich verbessert werden kann. Durch die verbesserte Aufnahme des Fehlerstromsignals können Fehlauslösungen des Fehlerstromschutzschalters 1 besser vermieden werden, die Standzeit von Maschinen erhöht und die Gefahr für Lebewesen weiter reduziert werden.

Bisher bekannte Bauformen von Fehlerstromschutzschaltern 1 mit digitaler Signalanalyse werden aufgrund deren hohen Kosten vor allem in Industrieanlagen eingesetzt. Durch den vermehrten Einsatz von Schaltnetzteilen und Phasenanschnittsteuerungen in Wohnbereichen treten immer häufiger hochfrequente Störungen im Energieversorgungsnetz eines solchen Wohnbereichs auf. Dadurch wird die Verbreitung derartiger Fehlerstromschutzschalter 1, welche gegenüber bekannten netzspannungsunabhängigen Fehlerstromschutzschaltern 1 deutlich erweiterte Möglichkeiten der Analyse und Bewertung eines Fehlerstromes bzw. eines Fehlerstromsignals aufweisen, auch vermehrt auf den Bereich der Elektroinstallation von Wohnbereichen erweitert.

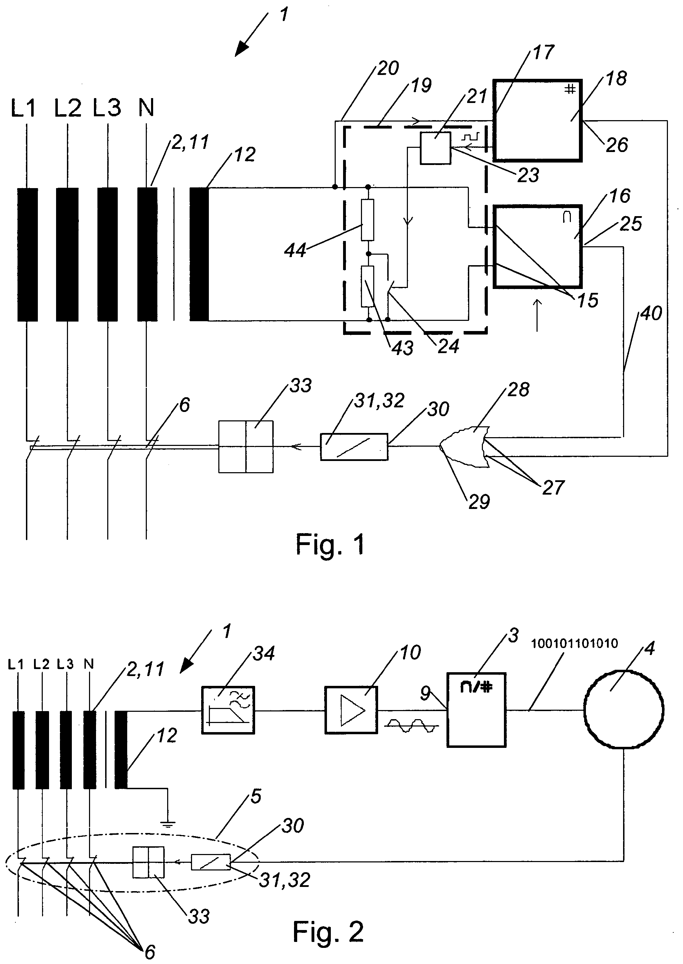

Fig. 2 zeigt beispielhaft einen Fehlerstromschutzschalter 1 gemäß dem Stand der Technik. Der Fehlerstromschutzschalter 1 weist eine erste Einheit 2 zur Detektion eines Fehlerstromes innerhalb eines elektrischen Energieversorgungsnetzes und Ausgabe eines analogen Fehlerstromsignals auf, welche erste Einheit 2 als Summenstromwandler 11 mit einer Sekundärwicklung 12 ausgebildet ist. Die erste Einheit 2 kann dabei auch als Fehlerstromdetektor bezeichnet werden, welcher zur Detektion eines Fehlerrstromes geeignet und/oder ausgebildet ist. Es kann auch vorgesehen sein, dass die erste Einheit 2 - auch bei den weiters beschriebenen Ausbildungen - mittels Hallgeneratoren, Shunt-Widerständen, oder Förstersonden aufgebaut sind, bzw. solche Bauteile umfassen. Das durch die erste Einheit 2 generierte und ausgegebene Fehlerstromsignal wird mittels eines Analog/DigitalWandlers 3 bzw. -Konverters von der analogen, wert- und zeitkontinuierlichen Form in die digitale, wert- und zeitdiskrete Form übergeführt. In den Fig. 2, 4 und 5 sind, um diesen Umstand zu Verdeutlichen jeweils vor dem Analog/Digital-Wandler 3 eine Sinuswelle, und nachfolgend dem Analog/Digital-Wandler 3 eine Folge aus "0" und "1" beispielhaft dargestellt, was keine Einschränkung auf sinusförmige analoge Fehlerstromsignale darstellt. Vor dem Analog/Digital-Wandler 3 durchläuft das analoge Fehlerstromsignal bevorzugt ein Tiefpassfilter 34, welches auch als Anti-Aliasing Filter bezeichnet wird, sowie gegebenenfalls, und wie abgebildet eine erste Signalaufbereitungseinheit 10, in welcher das analoge Fehlerstromsignal gegebenenfalls verstärkt wird.

Es ist bevorzugt vorgesehen sein, dass bei der Analog/Digital-Wandlung die Technik des Oversamplings angewandt wird, wobei das analoge Fehlerstromsignal mit einer höheren zeitlichen Auflösung abgetastet bzw. digitalisiert wird, als es in der ersten digitalen Signalverarbeitungseinheit 4 verarbeitet wird, wobei nach der Abtastung eine Mittelwertbildung einer vorgebbaren Anzahl an Sampels erfolgt. Diese Mittelwertbildung kann sowohl im Analog/Digital-Wandler 3, als auch in der ersten digitalen Signalverarbeitungseinheit 4 erfolgen. Durch das Oversampling kann ein Tiefpassfilter 34 geringerer Ordnung verwendet werden, welches einfacher im Aufbau ist und geringere Phasenfehler verursacht, als ein Tiefpassfilter 34 höherer Ordnung. Dadurch wird weiters der Signal/Rauschabstand verbessert.

Das digitale Fehlerstromsignal am Ausgang des Analog/Digital-Wandlers 3 wird an einen Eingang einer ersten digitalen Signalverarbeitungseinheit 4 gelegt. Mittels einer derartigen ersten digitalen Signalverarbeitungseinheit 4 ist eine detaillierte Analyse des digitalen Fehlerstromsignals möglich, wobei neben Eigenschaften wie dem Spitzenwert oder einem Gleichanteil des Fehlerstroms, weiters Parameter wie eine von der Signalform unabhängige Ermittlung eines Effektivwertes sowie eine Bewertung des gesamten Signalverlaufs in einem vorgebbaren Zeitabschnitt, sowie die Speicherung eines Fehlerstromverlaufes vorgesehen sein kann. Die erste digitale Signalverarbeitungseinheit 4 führt auch einen Vergleich des digitalen Fehlerstromsignals mit vorgegebenen Grenzwerten durch.

Ein Fehlerstromschutzschalter 1 umfasst weiters Trennkontakte 6 zum Trennen der von der ersten Einheit 2 überwachten Leiter L1, L2, L3, N eines Energieversorgungsnetzes. Die Trennkontakte 6 sind dabei bevorzugt an ein Schaltschloss 33 angekoppelt und können durch dieses Schaltschloss 33 geöffnet werden. Das Schaltschloss 33 wird dabei bevorzugt von einem Auslöseelement 31 angesteuert, welches bevorzugt als Permanentmagnetauslöser 32 ausgebildet ist. Wenigstens ein Ausgang der ersten digitalen Signalverarbeitungseinheit 4 steuert gemäß der gegenständlich dargestellten Ausführungsform das Auslöseelement 31 und kann dadurch im Bedarfsfall ein Trennen der Trennkontakte 6 veranlassen. Gemäß einer besonders einfachen bevorzugten Ausführungsform kann vorgesehen sein, dass die zweite Einheit 5 zur vorgebbaren Trennung von Trennkontakten 6 in dem elektrischen Energieversorgungsnetz durch die Auslöseeinheit 31 ausgebildet ist, welche Auslöseeinheit 31 zur wenigstens mittelbaren vorgebbaren Trennung der Trennkontakte 6 vorgesehen und/oder ausgebildet ist. Es kann auch vorgesehen sein, dass die zweite Einheit 5, neben der Auslöseeinheit 31 weiters das Schaltschloss 33 und/oder den Permanentmagnetauslöser 32 umfasst.

Folgend wird die Beschaltung der in Fig. 2 lediglich schematisch dargestellten Baugruppen zusammengefasst: Durch den Summenstromwandler 11 verlaufen die Leiter L1, L2, L3, N eines Energieversorgungsnetzes. Die Sekundärwicklung 12 des Summenstromwandlers 11 ist schaltungstechnisch mit einem Eingang des Tiefpassfilters 34 verbunden, dessen Ausgang schaltungstechnisch mit dem Eingang der ersten Signalaufbereitungseinheit 10 verbunden ist. Der Ausgang der ersten Signalaufbereitungseinheit ist schaltungstechnisch mit dem Eingang 9 des Analog/Digital-Wandlers 3 verbunden, dessen Ausgang schaltungstechnisch an einen Eingang der ersten digitalen Signalverarbeitungseinheit 4 angeschlossen ist. Ein Ausgang der ersten digitalen Signalverarbeitungseinheit 4 ist schaltungstechnisch mit dem Permanentmagnetauslöser 32 verbunden, welcher mechanisch auf das Schaltschloss 33 wirkt, welches wiederum mechanisch auf die Trennkontakte 6 wirkt.

Die Fig. 3 bis 5 zeigen drei bevorzugte Ausführungsformen eines Fehlerstromschutzschalters 1, welche nicht Teil der beanspruchten Erfindung sind, welche im Wesentlichen auf den vorbeschriebenen Fehlerstromschutzschalter 1 gemäß Fig. 2 aufbauen, wobei der Aufbau gemäß Fig. 2 vorzugsweise nicht einschränkend ist. Allen drei Ausführungsformen ist hiebei gemein, dass diese ersten Mittel 7 zur Anpassung des analogen Fehlerstromsignals an den Analog/Digital-Wandler 3 aufweisen. Wie eingangs bereits dargelegt kann ein Fehlerstromsignal, hinsichtlich dessen erforderlicher Auflösung und des zu erwartenden Aussteuerbereichs, einen Dynamikumfang jenseits von 110dB aufweisen, was Analog/Digital-Wandler 3 mit Auflösungsvermögen von 20Bit und mehr erforderlich machen würde. Allerdings hat sich gezeigt, dass es in der Praxis ausreichend ist jeweils nur einen gewissen Bereich dieses großen Dynamikbereichs gut aufzulösen. Die ersten Mittel 7 zur Anpassung des analogen Fehlerstromsignals an den Analog/Digital-Wandler 3 sind dabei bevorzugt derart ausgebildet, dass diese das analoge Fehlerstromsignal in Abhängigkeit der Eigenschaften des digitalen Fehlerstromsignals derart an den verwendeten Analog/DigitalWandler 3, welcher gemäß einer bevorzugten Ausführungsform lediglich eine Auflösung von 10 oder 12 Bit aufweist, anzupassen, dass das momentan anliegende analoge Fehlerstromsignal besonders gut von dem Analog/Digital-Wandler 3 aufgelöst wird, indem der momentan vorherrschende bzw. aktuelle Dynamikumfang des analogen Fehlerstromsignals an den Auflösungsbereich des Analog/Digital-Wandlers 3 angepasst wird. Hiefür ist bevorzugt vorgesehen, dass die ersten Mittel 7 von der ersten digitalen Signalverarbeitungseinheit 4 gesteuert sind.

Gemäß den folgend beschriebenen Ausführungsformen ist bevorzugt vorgesehen, dass die ersten Mittel 7 als zweite Mittel 8 zur Verstärkung oder Abschwächung des analogen Fehlerstromsignals ausgebildet sind.

Fig. 3 zeigt eine erste Ausführungsform eines Fehlerstromschutzschalters 1, welcher nicht Teil der beanspruchten Erfindung ist, bei welcher vorgesehen ist, dass die wenigstens eine erste Signalaufbereitungseinheit 10 eine Verstärkerelektronik mit vorgebbar veränderbarer Verstärkung umfasst, wobei der Begriff Verstärkung gemäß gegenständlicher

Patentanmeldung nicht auf das tatsächliche Verstärken, im Sinne eines Vergrößerns, beschränkt ist, sondern auch das Abschwächen eines Signals, daher eine negative Verstärkung, mit umfasst, wobei jede entsprechende Schaltungen zur Verstärkung bzw. Abschwächung eines analogen elektrischen Signals vorgesehen sein kann. Der Schaltungsaufbau entspricht weitestgehend dem Schaltungsaufbau des Fehlerstromschutzschalters 1 gemäß Fig. 2, wobei die wenigstens eine erste Signalaufbereitungseinheit 10 zur Vorgabe der Verstärkung von der ersten digitalen Signalverarbeitungseinheit 4 gesteuert ist, daher ein weiterer Ausgang der ersten digitalen Signalverarbeitungseinheit 4 mit einem Eingang der ersten Signalaufbereitungseinheit 10 schaltungstechnisch verbunden ist. Dadurch kann der tatsächlich zeitlich auftretende Dynamikbereich des analogen Fehlerstromsignals an den Wertebereich bzw. die Auflösung des Analog/Digital-Wandlers 3 angepasst werden. Dadurch kann die Genauigkeit bei kleinen Fehlerströmen erhöht werden, und gleichzeitig bei sehr großen Fehlerströmen ein Übersteuern verhindert werden. Dadurch können auch sehr große Fehlerströme signalformgetreu aufgenommen werden, wodurch die Fehlersuche deutlich vereinfacht werden kann. Durch die Steuerung der Verstärkung kann auch eine sehr exakte, weil bevorzugt stufenlose, Anpassung des analogen Fehlerstromsignals an den Analog/Digital-Wandler 3 erfolgen.

Gemäß einer zweiten Ausführungsform eines Fehlerstromschutzschalters, ist wenigstens ein erster Widerstand 13 parallel zu der Sekundärwicklung 12 geschaltet, und wenigstens ein von der ersten digitalen Signalverarbeitungseinheit 4 gesteuerter erster Schalter 14 zur Überbrückung oder Abschaltung des wenigstens einen ersten Widerstands 13 angeordnet. Fig. 4 zeigt eine bevorzugte Ausbildung einer derartigen zweiten Ausführungsform, welche nicht Teil der beanspruchten Erfindung ist, wobei - ausgehend von einem Fehlerstromschutzschalter gemäß Fig. 2 - eine serielle Kette eines ersten Widerstandes 13, eines zweiten Widerstandes 41 und eines dritten Widerstandes 42 parallel zur Sekundärwicklung 12 geschaltet ist. Solche ersten, zweiten und dritten Widerstände 13, 41, 42 werden auch als Bürde bzw. Bürdenwiderstände bezeichnet. Mittels des ersten bzw. eines weiteren dritten Schalters 13, 14, welche jeweils zur Überbrückung eines oder mehrerer der ersten, zweiten und/oder dritten Widerstände 13, 41, 42 angeordnet bzw. geschaltet sind, und welche jeweils von einem Ausgang der ersten digitalen Signalverarbeitungseinheit 4 gesteuert, daher betätigt werden können, können jeweils unterschiedliche der ersten, zweiten und/oder dritten Widerstände 13, 41, 42 zu der Sekundärwicklung 12 parallel geschaltet werden. Auch durch diese Maßnahmen kann der tatsächlich zeitlich auftretende Dynamikbereich des analogen Fehlerstromsignals stufenweise an den Wertebereich bzw. die Auflösung des Analog/Digital-Wandlers 3 angepasst werden, wobei die beschriebene zweite Ausführungsform sehr einfach umsetzbar ist, und sehr geringe Bauteilkosten aufweist. Dadurch kann die Genauigkeit bei kleinen Fehlerströmen erhöht werden, und gleichzeitig bei sehr großen Fehlerströmen ein Übersteuern verhindert werden. Dadurch können auch sehr große Fehlerströme signalformgetreu aufgenommen werden, wodurch die Fehlersuche deutlich vereinfacht werden kann.

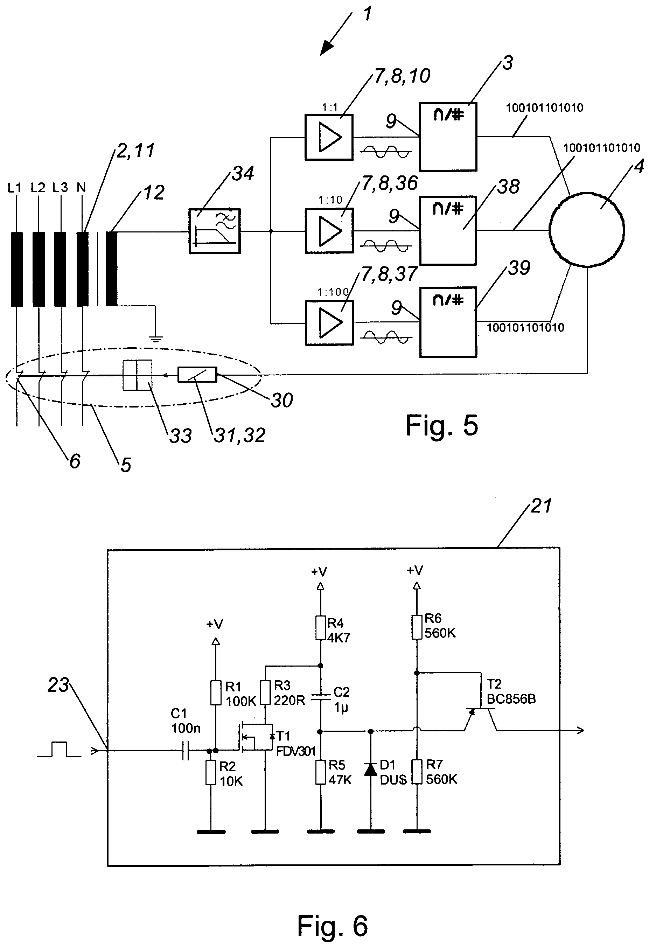

Fig. 5 zeigt eine dritte Ausführungsform eines Fehlerstromschutzschalters 1, welcher nicht Teil der beanspruchten Erfindung ist, wobei vor dem Eingang 9 des Analog/Digital-Wandlers 3 wenigstens eine erste Signalaufbereitungseinheit 10 geschaltet ist, welche eine Verstärkerelektronik mit vorgegebenem ersten Verstärkungsfaktor umfasst, wobei vor dem Eingang 9 des Analog/Digital-Wandlers 3 weiters wenigstens eine zweite Signalaufbereitungseinheit 36 geschaltet ist, welche eine Verstärkerelektronik mit vorgegebenem zweiten Verstärkungsfaktor umfasst, und wobei der erste Verstärkungsfaktor vom zweiten Verstärkungsfaktor unterschiedlich ist. Die in Fig. 5 dargestellte Ausführungsform weist dabei - ausgehend von einem Fehlerstromschutzschalter 1 gemäß Fig. 2 - neben der ersten Signalaufbereitungseinheit 10 weiters eine zweite Signalaufbereitungseinheit 36 und eine dritte Signalaufbereitungseinheit 37 auf, welche jeweils zueinander parallel geschaltet sind, wobei die erste, zweite, und dritte Signalaufbereitungseinheit 10, 36, 37 jeweils eine Verstärkerelektronik mit vorgegebener, und jeweils voneinander unterschiedlicher, Verstärkung umfasst. Bei der Ausführungsform gemäß Fig. 5 ist etwa vorgesehen, dass die erste Signalaufbereitungseinheit 10 einen Verstärkungsfaktor von 1:1, die zweite Signalaufbereitungseinheit 36 einen Verstärkungsfaktor von 1:10, und die dritte Signalaufbereitungseinheit 37 einen Verstärkungsfaktor von 1:100 aufweist. Jeweils nachfolgend der ersten, zweiten und dritten Signalaufbereitungseinheit 10, 36, 37 ist ein erster, zweiter bzw. dritter Analog/DigitalWandler 3, 38, 39 geschaltet, sodass jeder Signalaufbereitungseinheit 10, 36, 37 ein Analog/Digital-Wandler 3, 38, 39 nachgeschaltet ist. Es kann auch eine geringere oder eine größere Anzahl an Signalaufbereitungseinheiten 10, 36, 37 und Analog/Digital-Wandler 3, 38, 39 vorgesehen sein. Jeder der - gemäß gegenständlicher dritter Ausführungsform - drei Analog/Digital-Wandler 3, 38, 39 liefert ein - jeweils anderes - digitales Fehlerstromsignal an einen separaten Eingang der ersten digitalen Signalverarbeitungseinheit 4, wobei eine, von der erste digitalen Signalverarbeitungseinheit 4 gesteuerte Multiplexeinheit vorgesehen sein kann, mit welcher mehrere Analog/Digital-Wandler 3, 38, 39 auf lediglich einen Eingang der ersten digitalen Signalverarbeitungseinheit 4 geschaltet werden können. Auch durch diese Maßnahmen kann der tatsächlich zeitlich auftretende Dynamikbereich des analogen Fehlerstromsignals stufenweise an den Wertebereich bzw. die Auflösung der Analog/DigitalWandler 3, 38, 39 angepasst werden, wobei die beschriebene dritte Ausführungsform, aufgrund der mehrfach vorgesehenen Analog/Digital-Wandler 3, 38, 39 eine Bauteilredundanz aufweist. Dadurch kann die Genauigkeit bei kleinen Fehlerströmen erhöht werden, und gleichzeitig bei sehr großen Fehlerströmen ein Übersteuern verhindert werden. Dadurch können auch sehr große Fehlerströme signalformgetreu aufgenommen werden, wodurch die Fehlersuche deutlich vereinfacht werden kann.

Fig. 1 zeigt einen Fehlerstromschutzschalter 1, vorzugsweise einen vorstehend beschriebenen Fehlerstromschutzschalter 1, mit einer ersten Einheit 2, welche zur Detektion eines Fehlerstromes innerhalb eines elektrischen Energieversorgungsnetzes und Ausgabe eines analogen Fehlerstromsignals ausgebildet ist, wobei die erste Einheit 2 schaltungstechnisch mit ersten Eingängen 15 einer netzspannungsunabhängigen Auslöseelektronik 16 sowie mit zweiten Eingängen 17 einer netzspannungsabhängigen Auslöseelektronik 18 verbunden ist, wobei der Fehlerstromschutzschalter 1 Steuermittel 19 aufweist, welche zur Dämpfung der Wirkung der netzspannungsunabhängigen Auslöseelektronik 16 bei vorgebbar arbeitender netzspannungsabhängiger Auslöseelektronik 18 ausgebildet sind.

Dadurch kann die Einsatzbereitschaft und die Sicherheit von Fehlerstromschutzschaltern 1 mit netzspannungsabhängiger Auslöseelektronik 18 erhöht werden. Dadurch kann sichergestellt werden, dass die netzspannungsabhängigen Funktionen lediglich bei tatsächlich funktionierender netzspannungsabhängiger Auslöseelektronik 18 aktiviert werden. Dadurch kann weiters sichergestellt werden, dass eine weiters vorhandene netzspannungsunabhängige Auslöseelektronik 16 ausschließlich bei tatsächlich funktionierender netzspannungsabhängiger Auslöseelektronik 18 deaktiviert bzw. gedämpft wird. Dadurch wird sichergestellt, dass die netzspannungsunabhängigen Grundfunktionen des Fehlerstromschutzschalters 1 auch bei einer defekten netzspannungsabhängigen Auslöseelektronik 18 erhalten bleiben und der Fehlerstromschutzschalter 1 wenigstens das durch Normen vorgegebene Mindestmaß an Schutz gewährleistet.

Ein derartiger Fehlerstromschutzschalter 1 weist wenigstens eine netzspannungsunabhängige Auslöseelektronik 16 sowie eine netzspannungsabhängige Auslöseelektronik 18 auf, welche beide dazu ausgebildet sind den Fehlerstromschutzschalter 1 auszulösen, daher die Trennung bzw. das Öffnen der Trennkontakte 6 zu veranlassen. Der Fehlerstromschutzschalter 1 weist eine erste Einheit 2 gemäß den bereits beschriebenen bevorzugten Ausführungsformen auf, welche ein analoges Fehlerstromsignal generiert, welches sowohl an ersten Eingängen 15 der netzspannungsunabhängigen Auslöseelektronik 16, als auch an zweiten Eingängen 17 einer netzspannungsabhängigen Auslöseelektronik 18 anliegt.

Die netzspannungsunabhängige Auslöseelektronik 16 ist bevorzugt gemäß den bekannten Ausführungen netzspannungsunabhängiger Auslöseelektroniken 16 ausgebildet und weist bevorzugt eine Energiespeicher/Verzögerungsschaltung auf, bei welcher etwa ein Kondensator durch das analoge Fehlerstromsignal aufgeladen wird, wobei bei Erreichen eines vorgebbaren Ladungszustandes des Kondensators ein Schwellenwertschalter betätigt wird, welcher einen ersten Auslöseausgang 25 aktiviert. Parallel zu dem Kondensator kann etwa ein Entladewiderstand geschaltet sein.

Die netzspannungsabhängige Auslöseelektronik 18 ist bevorzugt als digitale netzspannungsabhängige Auslöseelektronik 18 ausgebildet, wobei bevorzugt die vorstehend beschriebenen unterschiedlichen Ausgestaltungen einer digitalen netzspannungsabhängigen Auslöseelektronik 18 vorgesehen sind. Sofern die netzspannungsabhängige Auslöseelektronik 18 einen Fehlerfall erkennt, welcher ein Öffnen der Trennkontakte 6 erforderlich macht, aktiviert diese einen zweiten Auslöseausgang 26. Unter dem Begriff "aktiviert" ist dabei eine vorgegebene Änderung des Zustandes des ersten bzw. zweiten Auslöseausganges 25, 26 im Sinne einer Informationsübermittlung zu verstehen.

Wie bereits dargelegt, sind sowohl die netzspannungsunabhängige Auslöseelektronik 16 als auch die netzspannungsabhängige Auslöseelektronik 18 zur Auslösung des Fehlerstromschutzschalters 1 vorgesehen. Gemäß der bevorzugten, in Fig. 1 schematisch dargestellten Ausführungsform eines derartigen Fehlerstromschutzschalters 1 ist bevorzugt vorgesehen, dass ein erster Auslöseausgang 25 der netzspannungsunabhängigen Auslöseelektronik 16 und ein zweiter Auslöseausgang 26 der netzspannungsabhängigen Auslöseelektronik 18 schaltungstechnisch mit den dritten Eingängen 27 eines logischen Oder-Gliedes 28 verbunden sind, und dass ein Ausgang 29 des logischen Oder-Gliedes 28 schaltungstechnisch mit einem vierten Eingang 30 eines Auslöseelements 31, welches insbesondere als Permanentmagnetauslöser 32 ausgebildet ist, verbunden ist. Der Ausgang des Auslöseelements 31 ist in bereits dargelegter Weise mit dem Schaltschloss 33 verbunden, welches mechanisch auf die Trennkontakte 6 wirkt. Dadurch kann sichergestellt werden, dass der Fehlerstromschutzschalter 1 auslöst, daher die Trennkontakte 6 geöffnet werden, sofern eine der beiden Auslöseelektroniken 16, 18 einen Fehlerfall detektiert.

Der Fehlerstromschutzschalter weist 1 Steuermittel 19 auf, welche zur Dämpfung der Wirkung der netzspannungsunabhängigen Auslöseelektronik 16 bei vorgebbar arbeitender netzspannungsabhängiger Auslöseelektronik 18 ausgebildet sind. Die Steuermittel 19 umfassend dabei bevorzugt die Gesamtheit der zur Erzielung dieser Dämpfung der Wirkung der netzspannungsunabhängigen Auslöseelektronik 16 erforderlichen Mittel bzw. Baugruppen, und werden bei der Ausführungsform gemäß Fig. 1 durch das fett strichliert dargestellte Rechteck veranschaulicht. Unter Dämpfung der Wirkung der netzspannungsunabhängigen Auslöseelektronik 16 ist in diesem Zusammenhang zu verstehen, dass die netzspannungsunabhängige Auslöseelektronik 16 keine oder nur eine geringere Wirkung auf nachfolgende Baugruppen, daher etwa auf das Auslöseelement, ausübt, als ohne die Dämpfung. Dadurch kann der Einfluss der netzspannungsunabhängigen Auslöseelektronik 16 auf nachfolgende Baugruppen eingeschränkt bzw. vollständig unterbunden werden. Dabei sind bevorzugt mehrere unterschiedliche Arten der Dämpfung dieser Wirkung der netzspannungsunabhängigen Auslöseelektronik 16 vorgesehen.

Gemäß einer ersten bevorzugten Ausbildung der Dämpfung dieser Wirkung der netzspannungsunabhängigen Auslöseelektronik 16 ist vorgesehen, dass die Steuermittel 19 zur vorgebbaren Dämpfung, insbesondere zur Unterbrechung, der Signalübertragung innerhalb der netzspannungsunabhängigen Auslöseelektronik 16 ausgebildet sind, daher, dass die netzspannungsunabhängige Auslöseelektronik 16 selbst gedämpft wird, bzw. schaltungstechnisch nicht funktionsfähig ist, etwa indem in der netzspannungsunabhängigen Auslöseelektronik 16 selbst ein Schalter angeordnet ist, welcher den Strom- bzw. Signalfluss unterbrechen kann.

Gemäß einer zweiten bevorzugten Ausbildung der Dämpfung dieser Wirkung der netzspannungsunabhängigen Auslöseelektronik 16 ist vorgesehen, dass die Steuermittel 19 zur vorgebbaren Dämpfung der Signalübertragung von einem ersten Auslöseausgang 25 der netzspannungsunabhängigen Auslöseelektronik 16 zu einem vierten Eingang 30 eines Auslöseelements 31, insbesondere zur vorgebbaren Dämpfung, vorzugsweise Unterbrechung, einer zweiten schaltungstechnischen Verbindung 40 zwischen dem ersten Auslöseausgang 25 und dem vierten Eingang 30, ausgebildet sind.

Besonders bevorzugt, und wie in Fig. 1 dargestellt, ist gemäß einer dritten Ausbildung der Dämpfung dieser Wirkung der netzspannungsunabhängigen Auslöseelektronik 16 vorgesehen, dass die Steuermittel 19 zur vorgebbaren Dämpfung der Signalübertragung von der ersten Einheit 2 zu wenigstens einem der ersten Eingänge 15, insbesondere zur vorgebbaren Dämpfung, vorzugsweise zur Unterbrechung, einer ersten schaltungstechnischen Verbindung 20 zwischen der ersten Einheit 2 und wenigstens einem der ersten Eingänge 15, ausgebildet sind. Gemäß Fig. 1 ist dabei vorgesehen, dass parallel zur Sekundärwicklung 12 des Summenstromwandlers 11 ein vierter und ein fünfter seriell geschalteter Widerstand 43, 44 angeschlossen sind, wobei wenigstens einer der vierten oder fünften Widerstände 43, 44 durch einen zweiten Schalter 24 überbrückbar ist.

Die Steuermittel 19 umfassen bevorzugt wenigstens eine Steuerelektronik 21, welche von der netzspannungsabhängigen Auslöseelektronik 18 angesteuert ist, und welche bevorzugt dazu ausgebildet ist, bei Anliegen des sich vorgebbar ändernden Steuersignals an dem Steuereingang 23 einen zweiten Schalter 24 anzusteuern. In diesem Zusammenhang ist vorgesehen, dass die netzspannungsabhängige Auslöseelektronik 18 eine zweite digitale Signalverarbeitungseinheit aufweist, und dass die zweite digitale Signalverarbeitungseinheit zur Ausgabe eines sich vorgebbar ändernden Steuersignals an einen Steuereingang 23 der Steuerelektronik 21 ausgebildet ist. Bevorzugt ist vorgesehen, dass die zweite digitale Signalverarbeitungseinheit einen Prozessor, insbesondere einen Mikroprozessor, Mikrocontroller und/oder einen digitalen Signalprozessor, umfasst. Besonders bevorzugt ist bei Implementierung einer der eingangs beschriebenen Arten der digitalen Verarbeitung eines Fehlerstromsignals in einem Fehlerstromschutzschalter 1, in eine gegenständliche netzspannungsabhängige Auslöseelektronik 18 vorgesehen, dass die erste und die zweite digitale Signalverarbeitungseinheit 4 einstückig ausgebildet sind, wodurch die Komponenten zur digitalen Signalverarbeitung, wie etwa Prozessor, Speicher, Datenbus und dergleichen lediglich einmal vorgesehen werden müssen.

Wie bereits dargelegt ist die zweite digitale Signalverarbeitungseinheit zur Ausgabe eines sich vorgebbar ändernden Steuersignals an einen Steuereingang 23 der Steuerelektronik 21 ausgebildet. Gemäß der bevorzugten Ausführungsform, dergemäß die zweite digitale Signalverarbeitungseinheit einen Prozessor aufweist, welcher die Signalanalyse des digitalen Fehlerstromsignals durchführt, ist vorgesehen, dass die zweite digitale Signalverarbeitungseinheit zusätzlich das sich vorgebbar ändernde Steuersignal erzeugt und ausgibt, wobei vorgesehen ist, dass dieses sich vorgebbar ändernde Steuersignal nur dann erzeugt wird, wenn die zweite digitale Signalverarbeitungseinheit ordnungsgemäß vorgebbar arbeitet. Dies kann durch entsprechende Programmierung des Prozessors einfach erreicht werden. Bevorzugt ist hiebei vorgesehen, dass - zusätzlich zu den anderen Arbeitsroutinen - weiters etwa ein vorgebbar periodisches Rechtecksignal als Steuersignal an den Steuereingang 23 der Steuerelektronik 21 ausgegeben wird, wie dies auch in Fig. 1 angedeutet ist. Es können aber auch andere Arten eines Steuersignals generiert und ausgegeben werden. Dadurch wird erstmals erreicht, dass bei einem Fehlerstromschutzschalter 1 mit netzspannungsabhängiger Auslöseelektronik 18 nicht nur das Vorhandensein der Versorgungsspannung oder der Bauteile überprüft wird, sondern tatsächlich die korrekte bzw. vorgegebene Funktion der für die netzspannungsabhängige Auslösung notwendigen Baugruppen. Dadurch kann sichergestellt werden, dass ein derartiger Fehlerstromschutzschalter 1 bei einer nicht funktionierenden netzspannungsabhängigen Auslöseelektronik 18 als voll netzspannungsunabhängiger Fehlerstromschutzschalter 1 arbeitet. Dadurch werden auch die Normen voll erfüllt, welche netzspannungsabhängige Fehlerstromschutzschalter 1 nicht zulassen.

Für die entsprechende Funktion der Steuermittel 19 ist eine entsprechende Steuerelektronik 21 notwendig, welche einen Ausgang lediglich dann aktiviert, wenn an deren Steuereingang 23 das entsprechend vorgegebene Steuersignal anliegt. Fig. 6 zeigt eine besonders bevorzugte Ausbildung einer Steuerelektronik 21 für ein periodisch rechteckförmiges Steuersignal, wobei der Darstellung die international gängigen Schaltsymbole und Dimensionsangaben verwendet wurden.

Kern der Schaltung ist das RC-Glied, gebildet aus R4+R5 und C2. Zum Einschaltzeitpunkt, wenn C2 entladen ist, liegen am R5, aufgrund der Spannungsteilung zwischen R4 und R5, ca. 90% der Versorgungsspannung + V an. Mit der Ladung von C2 beginnt die Spannung an R5 zu sinken.

Aufgabe des FET T1 ist es, über den Widerstand R3 und die Diode D1 den Kondensator C2 zu entladen. Die Gate-Spannung wird durch den Spannungsteiler R1/R2 auf einen Wert gelegt, der sich knapp unter jenem Wert der Steuerspannung befindet, bei welcher der FET leitend wird, wobei Streuungen berücksichtigt sind. Durch Anlegen eines rechteckförmigen Steuersignals am Steuereingang 23, welches über den Kondensator C1 an das Gate geführt wird, kann das Gate impulsförmig gesteuert werden, sodass der FET den Kondensator C2 regelmäßig entlädt. Dadurch wird sichergestellt, dass am Steuereingang 23 ein rechteckförmiges Steuersignal anliegen muss, um den Ausgang aktiv zu schalten. Eine statische Gleichspannung genügt nicht. Am Ausgang der Schaltung befindet sich ein PNP-Transistor in Basisschaltung. Über den Spannungsteiler R6/R7 wird eine Basisspannung festgelegt, die als Referenz dient. Unterschreitet die Spannung an R5 diesen Wert (Basis Emitterspannung) wird T2 hochohmig, woraus folgt, dass der Ausgang ausgeschaltet ist. Auch bei einem Fehlen eines Bauteils, einer kalten Lötstelle oder ähnlichen Fehlern bleibt der Ausgang abgeschaltet.

Folgend wird die Beschaltung der in Fig. 1 lediglich schematisch dargestellten Baugruppen zusammengefasst: Durch den Summenstromwandler 11 verlaufen die Leiter L1, L2, L3, N eines Energieversorgungsnetzes. Die Sekundärwicklung 12 des Summenstromwandlers 11 ist schaltungstechnisch sowohl mit den ersten Eingängen 15 der netzspannungsunabhängigen Auslöseelektronik 16, als auch den zweiten Eingängen 17 der netzspannungsabhängigen Auslöseelektronik 18 verbunden. Vor den ersten Eingängen 15, aber nachfolgend der Speisung der zweiten Eingänge 17 sind die zueinander seriell geschalteten vierten und fünften Widerstände 43, 44 parallel zur Sekundärwicklung 12 geschaltet, wobei ein zweiter Schalter 24 zur möglichen Überbrückung eines dieser Widerstände 43, 44 schaltungstechnisch angeordnet ist. Der zweite Schalter 24 wird von der Steuerelektronik 21 angesteuert, und ist hiezu mit dieser schaltungstechnisch verbunden. Ein Steuereingang 23 der Steuerelektronik 21 ist schaltungstechnisch mit einem Ausgang der netzspannungsabhängigen Auslöseelektronik 18 verbunden. Der erste Auslöseausgang 25 der netzspannungsunabhängigen Auslöseelektronik 16, sowie der zweite Auslöseausgang 26 der netzspannungsabhängigen Auslöseelektronik 18 sind jeweils mit den dritten Eingängen 27 eines logischen Oder-Gliedes 28 verbunden, dessen Ausgang 29 schaltungstechnisch mit dem Permanentmagnetauslöser 32 verbunden ist, welcher mechanisch auf das Schaltschloss 33 wirkt, welches wiederum mechanisch auf die Trennkontakte 6 wirkt.

Weitere Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Fehlerstromschutzschalter (1) mit einer ersten Einheit (2), welche zur Detektion eines Fehlerstromes innerhalb eines elektrischen Energieversorgungsnetzes und Ausgabe eines analogen Fehlerstromsignals ausgebildet ist, wobei die erste Einheit (2) schaltungstechnisch mit ersten Eingängen (15) einer netzspannungsunabhängigen Auslöseelektronik (16) sowie mit zweiten Eingängen (17) einer netzspannungsabhängigen Auslöseelektronik (18) verbunden ist, wobei der Fehlerstromschutzschalter (1) Steuermittel (19) aufweist, welche zur Dämpfung der Wirkung der netzspannungsunabhängigen Auslöseelektronik (16) bei vorgebbar arbeitender netzspannungsabhängiger Auslöseelektronik (18) ausgebildet sind, **dadurch gekennzeichnet, dass** die netzspannungsabhängige Auslöseelektronik (18) eine zweite digitale Signalverarbeitungseinheit aufweist, und dass die zweite digitale Signalverarbeitungseinheit zur Ausgabe eines sich vorgebbar ändernden Steuersignals an einen Steuereingang (23) der Steuerelektronik (21) ausgebildet ist.

2. Fehlerstromschutzschalter (1) nach Anspruch 1, **dadurch gekennzeichnet, dass** die Steuermittel (19) zur vorgebbaren Dämpfung der Signalübertragung von der ersten Einheit (2) zu wenigstens einem der ersten Eingänge (15), insbesondere zur vorgebbaren Dämpfung, vorzugsweise zur Unterbrechung, einer ersten schaltungstechnischen Verbindung (20) zwischen der ersten Einheit (2) und wenigstens einem der ersten Eingänge (15), ausgebildet sind.

3. Fehlerstromschuteschalter (1) nach Anspruch 1 oder 2, **dadurch gekennzeichnet, dass** die Steuermittel (19) zur vorgebbaren Dämpfung, insbesondere zur Unterbrechung, der Signalübertragung innerhalb der netzspannungsunabhängigen Auslöseelektronik (16) ausgebildet sind.

4. Fehlerstromschutzschalter (1) nach Anspruch 1, 2 oder 3, **dadurch gekennzeichnet, dass** die Steuermittel (19) zur vorgebbaren Dämpfung der Signalübertragung von einem ersten Auslöseausgang (25) der netzspannungsunabhängigen Auslöseelektronik (L6) zu einem vierten Eingang (30) eines Auslöseelements (31), insbesondere zur vorgebbaren Dämpfung, vorzugsweise Unterbrechung, einer zweiten schaltungstechnischen Verbindung (20) zwischen dem ersten Auslöseausgang (25) und dem vierten Eingang (30), ausgebildet sind.

5. Fehlerstromschutzschalter (1) nach einem der Ansprüche I bis 4, **dadurch gekennzeichnet, dass** die Steuermittel (19) wenigstens eine Steuerelektronik (21) umfassen, welche von der netzspannungsabhängigen Auslöseelektronik (18) angesteuert ist.

6. Fehlerstromschutzschalter (1) nach einem der Ansprüche 1 bis 5, **dadurch gekennzeichnet, dass** die Steuerelektronik (21) dazu ausgebildet ist, bei Anliegen des sich vorgebbar ändernden Steuersignals an dem Steuereingang (23) einen zweiten Schalter (24) anzusteuern.

7. Fehlerstromschutzschalter (1) nach einem der Ansprüche I bis 6, **dadurch gekennzeichnet, dass** der erste Auslöseausgang (25) der netzspannungsunabhängigen Auslöseelektronik (16) und ein zweiter Auslöseausgang (26) der netzspannungsabhängigen Auslöseelektronik (18) schaltungstechnisch mit den dritten Eingängen (27) eines logischen Oder-Gliedes (28) verbunden sind, und dass ein Ausgang (29) des logischen Oder-Gliedes (28) schaltungstechnisch mit dem vierten Eingang (30) des Auslöseelements (31), welches insbesondere als Permanentmagnetauslöser (32) ausgebildet ist, verbunden ist.

8. Fehlerstromschutzschalter (1) nach einem der Ansprüche 1 bis 7, **dadurch gekennzeichnet, dass** der Fehlerstromschuteschalter (1) einen ersten Analog/Digital-Wandler (3) zur Umwandlung des analogen Fehlerstromsignals in ein digitales Fchlerstromsignal, eine erste digitale Signalverarbeitungseinheit (4), und eine zweiten Einheit (5) zur vorgebbaren Trennung von Trennkontakten (6) in dem elektrischen Energieversorgungsnetz aufweist, wobei vor dem Eingang (9) des Analog/Digital-Wandlers (3) wenigstens eine erste Signalaufbereitungseinheit (10) geschaltet ist, welche eine Verstärkerelektronik mit vorgegebenem ersten Verstärkungsfaktor umfasst, dass vor dem Eingang eines zweiten Analog/Digital-Wandlers (38) wenigstens eine zweite Signalaufbereitungseinheit (36) geschaltet ist, welche eine Verstärkerelektronik mit vorgegebenem zweiten Verstärkungsfaktor umfasst, dass der erste Verstärkungsfaktor vom zweiten Verstärkungsfaktor unterschiedlich ist, und dass die erste Signalaufbereitungseinheit (10) schaltungstechnisch parallel zur zweiten Signalaufbereitungseinheit (36) angeordnet ist.

## Claims

1. Residual-current circuit breaker (1) with a first unit (2) configured to detect a fault current within an electric power supply network and to output an analog fault current signal, wherein the first unit (2) is connected by circuitry with first inputs (15) of an electronic tripping system (16) independent on line voltage and with second inputs (17) of an electronic tripping system (18) dependent on line voltage, wherein the residual-current circuit breaker (1) comprises control means (19) configured for damping the effect of the electronic tripping system (16) independent on line voltage in the case of an electronic tripping system (18) dependent on line voltage which works as predetermined, **characterised in that** the electronic tripping system (18) dependent on line voltage comprises a second digital signal processing unit, and that the second digital signal processing unit is configured to output a predeterminably changing control signal to a control input (23) of the electronic control system (21).

2. Residual-current circuit breaker (1) according to claim 1, **characterised in that** the control means (19) are configured for the predeterminable damping of the signal transmission from the first unit (2) to at least one of the first inputs (15), in particular for predeterminable damping, preferably for interrupting, a first circuit connection (20) between the first unit (2) and at least one of the first inputs (15).

3. Residual-current circuit breaker (1) according to claim 1 or 2, **characterised in that** the control means (19) are configured for predeterminable damping, in particular for interruption, of the signal transmission within the electronic tripping system (16) independent on line voltage.

4. Residual-current circuit breaker (1) according to claim 1, 2 or 3, **characterised in that** the control means (19) are configured for predeterminable damping of the signal transmission from a first trip output (25) of the electronic tripping system (16) independent on line voltage to a fourth input (30) of a trip element (31), in particular for predeterminable damping, preferably interruption, of a second circuit connection (20) between the first trip output (25) and the fourth input (30).

5. Residual-current circuit breaker (1) according to any of claims 1 to 4, **characterised in that** the control means (19) comprise at least one electronic control system (21) which is triggered by the electronic tripping system (18) dependent on line voltage.

6. Residual-current circuit breaker (1) according to any of claims 1 to 5, **characterised in that** the electronic control system (21) is configured to trigger a second switch (24) when the control signal which changes in a predeterminable manner is applied to the control input (23).

7. Residual-current circuit breaker (1) according to any of claims 1 to 6, **characterised in that** the first trip output (25) of the electronic tripping system (16) independent on line voltage and a second trip output (26) of the electronic tripping system (18) dependent on line voltage are connected by circuitry to the third inputs (27) of a logic OR-element (28), and that an output (29) of the logic OR-element (28) is connected by circuitry with the fourth input (30) of the trip element (31) which is in particular configured as a permanent magnet trip (32).

8. Residual-current circuit breaker (1) according to any of claims 1 to 7, **characterised in that** the residual-current circuit breaker (1) comprises a first analog-to-digital converter (3) for converting the analog fault current signal into a digital fault current signal, a first digital signal processing unit (4), and a second unit (5) for predeterminably disconnecting break contacts (6) in the electric power supply network, wherein at least one first signal regeneration unit (10) is switched before the input (9) of the analog-to-digital converter (3) which comprises an electronic amplification system with a predetermined first amplification factor, that at least one second signal regeneration unit (36) is switched before the input of a second analog-to-digital converter (38) which comprises an electronic amplification system with a predetermined second amplification factor, that the first amplification factor differs from the second amplification factor, and that the first signal regeneration unit (10) is arranged by circuitry parallel to the second signal regeneration unit (36).

## Revendications

1. Disjoncteur à courant différentiel (1) avec une première unité (2) qui est conçue pour détecter un courant différentiel à l'intérieur d'un réseau d'alimentation en énergie électrique et pour délivrer un signal de courant différentiel analogique,
dans lequel la première unité (2) est reliée par des circuits à des premières entrées (15) d'une électronique de déclenchement (16) indépendante de la tension de réseau ainsi qu'à des deuxièmes entrées (17) d'une électronique de déclenchement (18) dépendante de la tension de réseau,
dans lequel le disjoncteur à courant différentiel (1) comporte des moyens de commande (19) qui sont conçus pour atténuer l'action de l'électronique de déclenchement (16) indépendante de la tension de réseau en présence d'une électronique de déclenchement (18) dépendante de la tension de réseau qui fonctionne d'une manière pouvant être prescrite,
**caractérisé en ce que** l'électronique de déclenchement (18) dépendante de la tension de réseau comporte une deuxième unité de traitement de signal numérique et **en ce que** la deuxième unité de traitement de signal numérique est conçue pour délivrer un signal de commande variant d'une manière pouvant être prescrite à une entrée de commande (23) de l'électronique de commande (21).

2. Disjoncteur à courant différentiel (1) selon la revendication 1, **caractérisé en ce que** les moyens de commande (19) sont conçus pour atténuer d'une manière pouvant être prescrite la transmission de signal de la première unité (2) à au moins l'une des premières entrées (15), en particulier pour atténuer d'une manière pouvant être prescrite, de préférence pour interrompre, une première connexion de circuit (20) entre la première unité (2) et au moins l'une des premières entrées (15).

3. Disjoncteur à courant différentiel (1) selon la revendication 1 ou 2, **caractérisé en ce que** les moyens de commande (19) sont conçus pour atténuer d'une manière pouvant être prescrite, en particulier pour interrompre, la transmission de signal à l'intérieur de l'électronique de déclenchement (16) indépendante de la tension de réseau.

4. Disjoncteur à courant différentiel (1) selon la revendication 1, 2 ou 3, **caractérisé en ce que** les moyens de commande (19) sont conçus pour atténuer d'une manière pouvant être prescrite la transmission de signal d'une première sortie de déclenchement (25) de l'électronique de déclenchement (16) indépendante de la tension de réseau à une quatrième entrée (30) d'un élément de déclenchement (31), en particulier pour atténuer d'une manière pouvant être prescrite, de préférence pour interrompre, une deuxième connexion de circuit (20) entre la première sortie de déclenchement (25) et la quatrième entrée (30).

5. Disjoncteur à courant différentiel (1) selon l'une quelconque des revendications 1 à 4, **caractérisé en ce que** les moyens de commande (19) comprennent au moins une électronique de commande (21) qui est commandée par l'électronique de déclenchement (18) dépendante de la tension de réseau.

6. Disjoncteur à courant différentiel (1) selon l'une quelconque des revendications 1 à 5, **caractérisé en ce que** l'électronique de commande (21) est conçue pour commander un deuxième interrupteur (24) en présence du signal de commande variant d'une manière pouvant être prescrite au niveau de l'entrée de commande (23).

7. Disjoncteur à courant différentiel (1) selon l'une quelconque des revendications 1 à 6, **caractérisé en ce que** la première sortie de déclenchement (25) de l'électronique de déclenchement (16) indépendante de la tension de réseau et une deuxième sortie de déclenchement (26) de l'électronique de déclenchement (18) dépendante de la tension de réseau sont reliées par des circuits aux troisièmes entrées (27) d'un élément Ou logique (28) et **en ce qu'**une sortie (29) de l'élément Ou logique (28) est reliée par des circuits à la quatrième entrée (30) de l'élément de déclenchement (31) qui est conçu en particulier comme un déclencheur à aimant permanent (32).

8. Disjoncteur à courant différentiel (1) selon l'une quelconque des revendications 1 à 7, **caractérisé en ce que** le disjoncteur à courant différentiel (1) comporte un premier convertisseur analogique/numérique (3) destiné à convertir le signal de courant différentiel analogique en un signal de courant différentiel numérique, une première unité de traitement de signal numérique (4) et une deuxième unité (5) destinée à couper d'une manière pouvant être prescrite des contacts de coupure (6) dans le réseau d'alimentation en énergie électrique,
dans lequel au moins une première unité de traitement de signal (10) qui comprend une électronique d'amplificateur avec un premier facteur d'amplification prescrit est branchée avant l'entrée (9) du convertisseur analogique/numérique (3),
**en ce qu'**au moins une deuxième unité de traitement de signal (36) qui comprend une électronique d'amplificateur avec un deuxième facteur d'amplification prescrit est branchée avant l'entrée d'un deuxième convertisseur analogique/numérique (38),
**en ce que** le premier facteur d'amplification est différent du deuxième facteur d'amplification
et **en ce que** la première unité de traitement de signal (10) est agencée par des circuits en parallèle avec la deuxième unité de traitement de signal (36).
